Europäisches Patentamt

European Patent Office

Office européen des brevets

(19)

(11) Numéro de publication: **0 313 443**
**A1**

(12) # DEMANDE DE BREVET EUROPEEN

(21) Numéro de dépôt: **88402600.6**

(22) Date de dépôt: **13.10.88**

(51) Int. Cl.4: **C 01 B 21/082**
**G 02 B 1/00**

(30) Priorité: **13.10.87 FR 8714113**

(43) Date de publication de la demande:
**26.04.89 Bulletin 89/17**

(84) Etats contractants désignés:
**AT BE CH DE ES FR GB GR IT LI LU NL SE**

(71) Demandeur: **INNOMAT**
**26 Cour de Chazelles B.P. 102**
**F-56103 Lorient Cédex (FR)**

(72) Inventeur: **Laurent, Yves**
**Les Landes de Billé, Thorigné-Fouillard**
**F-35510 Cesson-Sévigné (FR)**

**Labbé, Jean-Claude**
**67 rue Pierre & Marie Curie**
**F-87000 Limoges (FR)**

**Guyader, Jean**
**Le Monthelon**
**F-35690 Acigné (FR)**

**Jeanne, Alain**
**1 rue du Maréchal Juin**
**F-87100 Limoges (FR)**

(74) Mandataire: **Ahner, Francis et al**
**CABINET REGIMBEAU 26, avenue Kléber**
**F-75116 Paris (FR)**

(54) **Procédé de préparation d'oxynitrure d'aluminium et son application à la réalisation de fenêtres infra-rouges.**

(57) La présente invention concerne un nouveau procédé pour la préparation d'oxynitrure d'aluminium (AlON) de structure spinelle, présentant une haute pureté.

Le procédé selon l'invention est caractérisé en ce que l'on effectue les opérations suivantes :

**i)** on mélange intimement, à l'état pulvérulent, de l'alumine ($Al_2O_3$) et du nitrure de bore (BN) en respectant une proportion molaire de BN comprise entre 18 et 23% du mélange pulvérulent $Al_2O_3$ + BN;

**ii)** on porte ledit mélange pulvérulent $Al_2O_3$ + BN à une température réactionnelle comprise entre 1820 et 1860°C, sous une atmosphère non oxydante, en particulier sous une atmosphère de gaz neutre, pendant une durée suffisante pour réduire la totalité de l'alumine $Al_2O_3$, et

**iii)** on récupère l'oxynitrure d'aluminium à l'état de poudre.

L'oxynitrure d'aluminium obtenu par la mise en oeuvre de ce procédé peut être fritté et soumis à un traitement thermique, pour donner naissance à des matériaux transparents aux longueurs d'onde des spectres visible et infra-rouge.

EP 0 313 443 A1

Bundesdruckerei Berlin

**Description**

## PROCEDE DE PREPARATION D'OXYNITRURE D'ALUMINIUM ET SON APPLICATION A LA REALISATION DE FENETRES INFRA-ROUGES

La présente invention concerne un nouveau procédé pour la préparation d'oxynitrure d'aluminium (AlON) de structure spinelle, présentant une haute pureté.

La haute pureté de l'AlON se traduit par une couleur blanche parfaite de la poudre synthétisée. Un tel AlON présente une transparence remarquable aux longueurs d'ondes des spectres infra-rouge et visible. En revanche, une poudre grise d'AlON qui contient des impuretés, principalement du carbone, conduit à un fritté noir dont les qualités de transmission optique sont médiocres voire nulles dans la mesure où la transparence est obtenue par grossissement des grains du produit fritté lors du traitement thermique, ce processus étant complètement bloqué par la présence d'impuretés ségrégées aux joints de grains.

Il est donc essentiel de pouvoir disposer d'un procédé de fabrication qui conduise à de l'oxynitrure d'aluminium très pur et qui reste cependant compatible avec les exigences d'une exploitation industrielle, i.e. en particulier qui présente des conditions de mise en oeuvre acceptables d'un point de vue économique, notamment des temps de réaction relativement courts.

Dans la technique antérieure, il n'existe pas de procédé permettant la préparation d'AlON pur, qui puisse être aisément transposé à l'échelon industriel.

L'AlON peut par exemple être préparé par carbonitruration de l'alumine. Ce procédé consiste à mélanger de l'alumine alpha et du carbone sous forme de noir de fumée, d'abord au mortier, puis 12 heures au Turbulat. On utilise par exemple 5,22 g de carbone pour 100g de mélange. La poudre est disposée dans une nacelle en graphite dont les parois sont recouvertes d'un revêtement protecteur, afin d'éviter la diffusion du carbone.

Le traitement thermique est réalisé dans un four équipé d'un résistor de graphite, sous courant d'azote, dans les conditions suivantes :
- 3 heures à 1600°C ($Al_2O_3 + C$     $AlN + CO$)
- 4 heures à 1850°C ($Al_2O_3 + AlN \rightarrow AlON$)

Ce procédé présente un certain nombre d'inconvénients majeurs. Il nécessite tout d'abord une prise de précautions scrupuleuses et, en tout état de cause, implique un traitement thermique de très longue durée. Au surplus, malgré toutes les précautions prises, on obtient parfois un AlON relativement pur, mais de composition plus riche en azote que celle que l'on peut attendre de la composition des produits de départ. Ainsi, la teneur molaire en azote s'est par exemple située entre 0,5 et 0,55, alors même que les conditions expérimentales auraient dû amener à une teneur de 0,44, soit à une stoechiométrie $Al_{2,81}O_{3,56}N_{0,44}$.

Avec un tel procédé, on obtient souvent un AlON relativement pur mais d'aspect gris, ce qui est interprété soit par une mauvaise homogénéisation, soit par un pont de diffusion du carbone au travers de la couche protectrice des nacelles de réaction.

Enfin, dans la majorité des cas, on obtient un oxynitrure mélangé à des proportions variables de 2 à 10% de nitrure d'aluminium (estimation aux rayons X).

L'AlON peut également être synthétisé à partir d'un mélange d'alumine et de nitrure d'aluminium. Un tel procédé nécessite un premier broyage du mélange $Al_2O_3 + AlN$ dans le méthanol pendant une durée d'environ 20 heures, suivi d'une opération de séchage.

La synthèse proprement dite de l'AlON est conduite à des températures de l'ordre de 1600 à 1750°C pendant des durées de l'ordre de 4 heures dans un four, au sein duquel règne une pression d'azote de 0 à 34,5 kPa.

En vue du frittage de l'AlON, il faut ensuite procéder à un second broyage pendant environ 72 heures dans un broyeur à billes pour obtenir des grains d'une dimension inférieure à 1 μm. Il apparaît clairement qu'un tel procédé est très désavantageux du point de vue économique. Sa transposition à l'échelon industriel est pratiquement inenvisageable.

Conformément à la présente invention, le procédé de préparation d'AlON de structure spinelle, de haute pureté, est caractérisé en ce que l'on effectue les opérations suivantes :

i) on mélange intimement, à l'état pulvérulent, de l'alumine ($Al_2O_3$) et du nitrure de bore (BN) en respectant une proportion molaire de BN comprise entre 18 et 23% du mélange pulvérulent $Al_2O_3 + BN$ ;

ii) on porte ledit mélange pulvérulent $Al_2O_3 + BN$ à une température réactionnelle comprise entre 1820 et 1860°C, sous une atmosphère non oxydante, en particulier sous une atmosphère de gaz neutre, pendant une durée suffisante pour réduire la totalité de l'alumine $Al_2O_3$, et

iii) on récupère l'oxynitrure d'aluminium à l'état de poudre.

La présente invention concerne également l'application de l'oxynitrure d'aluminium obtenu par la mise en oeuvre de ce procédé, à la réalisation de matériaux frittés transparents aux longueurs d'onde des spectres visible et infra-rouge, en particulier à la réalisation de fenêtres transparentes au rayonnement infra-rouge.

D'autres caractéristiques et avantages de la présente invention apparaîtront à la lecture de la description détaillée faite ci-après, notamment en référence aux dessins annexés sur lesquels :

- la figure 1 représente la variation des proportions des différents produits en présence, en fonction de la teneur en BN du mélange initial,

- la figure 2 représente la variation des proportions des différents produits en présence, en fonction de la température réactionnelle,

- la figure 3 représente la variation des proportions des différents produits en présence, en fonction du temps de réaction, et

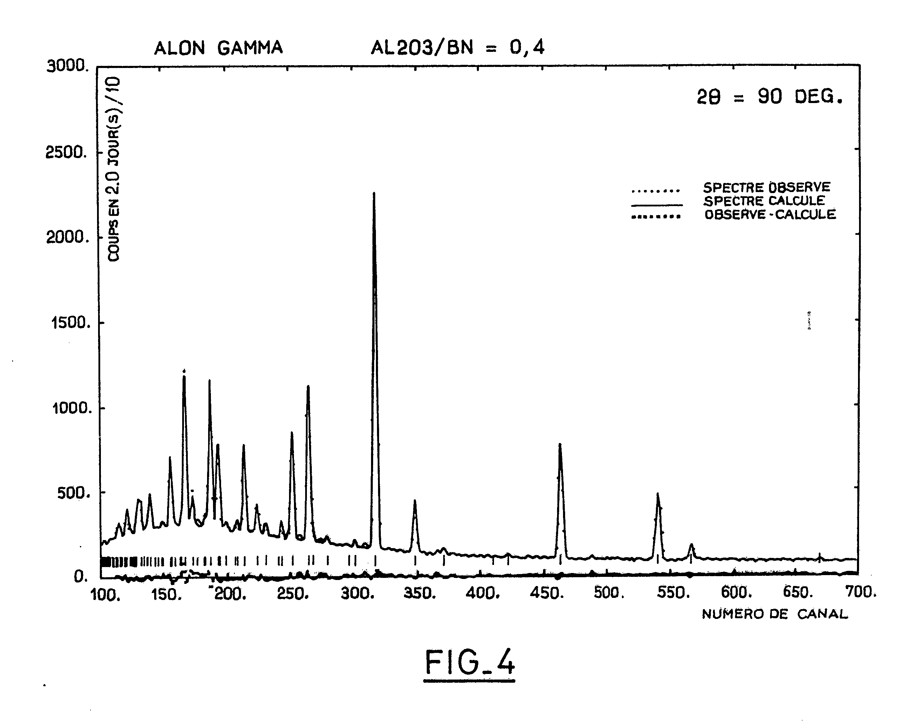

- la figure 4 représente le spectre de diffraction neutronique en temps de vol.

La première étape du procédé selon l'invention consiste à préparer un mélange intime pulvérulent d'$Al_2O_3$ et de BN en respectant scrupuleusement une proportion molaire de BN comprise entre 18 et 23% du mélange pulvérulent de départ $Al_2O_3$ + BN.

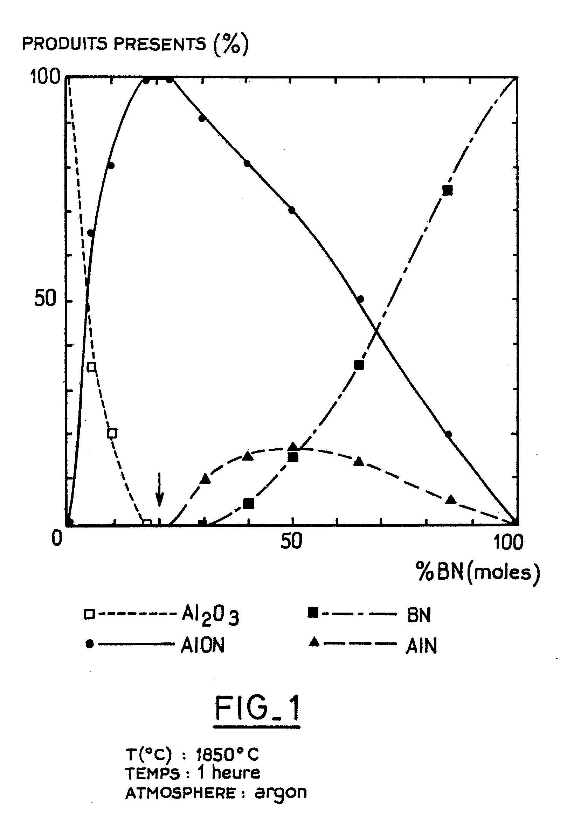

L'expérimentation telle qu'illustrée par la courbe de la figure 1 a démontré qu'en dessous d'une proportion molaire de 18% de BN, il subsistait un excès d'alumine.

Pour des proportions molaires de BN comprises entre 18 et 23% du mélange pulvérulent de départ, on récupère à l'état pulvérulent un oxyde d'aluminium de structure spinelle présentant une composition intermédiaire entre les deux compositions limites suivantes :

$Al_{2,77} O_{3,68} N_{0,32}$
$Al_{2,81} O_{3,57} N_{0,43}$

Pour une teneur molaire supérieure à 23% de BN par rapport au mélange pulvérulent de départ, on observe que toute l'alumine a réagi et a donc disparu du mélange final. A côté d'un excès de BN, on retrouve dans ce mélange AlON et AlN, ce dernier provenant selon toute vraisemblance d'une réaction entre BN et AlON.

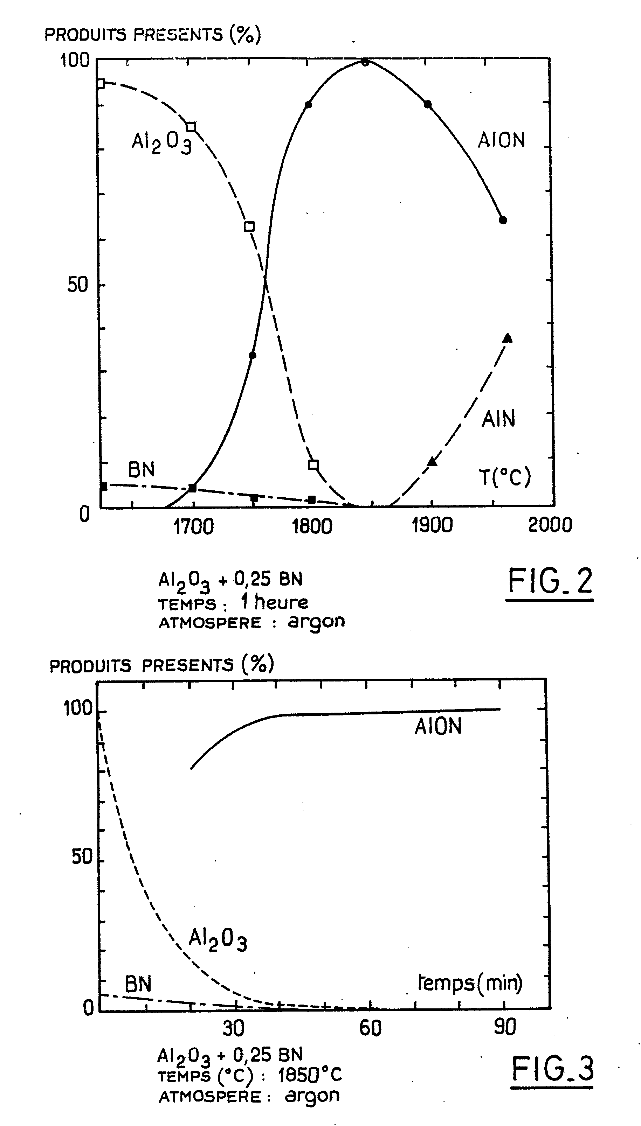

A partir d'une composition optimale du mélange de départ correspondant à 1 mole d'alumine pour 0,25 mole de BN, il a été procédé à une étude de l'influence de la température de palier (figure 2). L'analyse de cette figure montre que la réaction ne se produit pas en dessous de 1700°C. Les premières traces d'AlON n'apparaissent qu'au-delà de cette température. La température optimale fixée à 1850°C assure une réaction complète avec une pureté remarquable du produit obtenu. On se trouve en effet dans la zone de stabilité de l'oxynitrure, ce qui évite toute formation d'AlN. Dans la pratique, le mélange pulvérulent $Al_2O_3$ + BN doit être porté à une température réactionnelle comprise entre 1820°C et 1860°C. Ce traitement thermique est effectué sous une atmosphère non oxydante, en particulier une atmosphère de gaz neutre, par exemple sous argon. On évitera de préférence une atmosphère d'azote pour éviter que ce gaz ne réagisse ; ainsi seul l'azote du nitrure de bore participe à la réaction.

Ce traitement thermique doit être mené pendant une durée suffisante pour réduire la totalité de l'alumine. L'analyse de la figure 3 représentant les variations de produits en présence en fonction du temps de réaction, montre que la réaction est rapide puisqu'en 10 minutes 50% environ de l'AlON sont déjà formés. En 30 minutes, on observe que plus de 95% d'AlON ont pu être obtenus, et après 45 minutes de traitement thermique, l'analyse ne révèle plus que quelques traces d'alumine. Dans la pratique, il a été vérifié qu'un palier de traitement thermique d'une heure permettait d'assurer une reproductibilité parfaite des résultats.

A une telle température de l'ordre de 1850°C, l'augmentation du temps de palier (par exemple 1 h 30) ne modifie en rien les résultats observés, ce qui confirme la stabilité de la phase AlON dans les conditions expérimentales particulières du procédé de l'invention.

Une première série d'expériences a été menée dans un four équipé d'un résistor et de feutres isolants en graphite, avec un moule de cette même matière. Dans pareil cas, le mélange pulvérulent $Al_2O_3$ + BN doit bien sûr être déposé sur un support inerte, tel qu'un métal réfractaire, ou bien une céramique inerte, telle que le nitrure d'aluminium à l'état fritté. Il a été vérifié par ailleurs que cet environnement très carboné ne jouait aucun rôle dans le déroulement des réactions. Une autre série d'expérimentations a été en effet menée dans un four à chauffage haute fréquence dans un environnement dépourvu de toute pièce en graphite. Les résultats obtenus ont été parfaitement comparables à ceux enregistrés précédemment, ce qui montre l'indépendance des réactions par rapport à la présence de graphite et plus généralement à l'environnement.

Exemple de mise en oeuvre particulier

On prépare par mélange intime environ 4g d'une poudre de composition molaire $Al_2O_3$ + 0,25 BN. L'alumine utilisée est une alumine alpha de haute pureté commercialisée par la Société FLUKA AG. ayant les caractéristiques suivantes :

| alumine calcinée à 1300°C | | |
|---|---|---|
| granulométrie moyenne : | 0,3 μm | |
| surface spécifique : | 5,7 m²/g (méthode BET) | |
| pureté : | 99,99% | |
| impuretés : | Na | 25 ppm |
| | Si | 30 ppm |
| | Fe | 10 ppm. |

Le nitrure de bore utilisé provenait de la Société ALFA VENTRON et présentait les caractéristiques suivantes :

| granulométrie moyenne : | 0,3 μm |
|---|---|
| surface spécifique : | 7,5 m²/g (méthode BET) |
| analyse : | B = 43,5% ; N = 56,1% |
| théorie : | B = 43,56% ; N = 56,44%. |

Ce mélange $Al_2O_3$ + 0,25 BN est placé dans une nacelle en nitrure d'aluminium fritté, puis introduit dans un four porté à une température de 1850°C pendant 1 heure sous atmosphère d'argon.

Une étude complète de la phase AlON ainsi obtenue a été effectuée, notamment en comparaison avec un oxynitrure d'aluminium obtenu par carbonitruration en observant toutes les précautions scrupuleuses préalablement énoncées.

### Spectre de rayons X

Les spectres sont identiques, aucune impureté n'a pu être constatée dans le fond continu. Les mêmes intensités relatives des pics sont retrouvées de façon satisfaisante.

### Composition

L'AlON a été oxydé pendant 20 heures à 1550°C sous air, le produit formé est de l'alumine alpha, la différence de masse permet de doser l'azote. Le résultat obtenu est : $Al_{2,786}O_{3,64}N_{0,36}$.

### Diffraction neutronique en temps de vol

Après affinement de la structure, on obtient un facteur de confiance R = 0,03, ce qui correspond à un bon recouvrement du spectre calculé par rapport au spectre observé, les résultats obtenus sont les suivants :

| | AlON $(Al_2O_3$-BN) | AlON (CARBONI-TRURATION) |
|---|---|---|
| * paramètre de maille | a = 7,9417 Å | 7,9493 Å |
| * position du groupement ON dans le spinelle | x(ON) = 0,2564 | 0,2564 |
| * facteur d'agitation thermique | Al Tetra = 0,347 Å$^2$ | 0,352 Å$^2$ |
| | Al Octa = 0,599 Å$^2$ | 0,6 Å$^2$ |
| | ON = 0,563 Å$^2$ | 0,565 Å$^2$ |
| * taux d'occupation des sites tétraédriques | = 1 | 1 |
| ce qui donne, connaissant la composition | $Al_{Tetra}$-$(Al_{Octa})_{1,786}$-$(ON)_4$ | $Al_{Tetra}$-$(Al_{Octa})_{1,833}$-$(ON)_4$ |

### Frittage

Les conditions de frittage utilisées sont les conditions classiques, c'est-à-dire 4 heures à 1750°C sous une pression de 40 MPa, sous atmosphère d'azote. On obtient ainsi des pastilles translucides ayant un faible coefficient d'absorption aux longueurs d'onde des spectres infra-rouge et visible. En conséquence, l'oxynitrure d'aluminium obtenu par la mise en oeuvre du procédé précédemment décrit peut être fritté et soumis à un traitement thermique pendant environ 15 heures à environ 1950°C, pour donner naissance à des matériaux transparents aux longueurs d'onde des spectres visible et infra-rouge. Ils peuvent donc être en particulier utilisés en tant que fenêtres transparentes au rayonnement infra-rouge. Ils peuvent également être utilisés, après frittage et traitement thermique, comme hublot de surveillance de réacteurs chimiques.

Par rapport au procédé de la technique antérieure connue, et en particulier par rapport au procédé consistant à faire réagir $Al_2O_3$ et AlN, le procédé selon l'invention présente en outre l'avantage déterminant de conduire directement à un produit pulvérulent qui peut être directement soumis au processus de frittage et/ou au traitement thermique sous azote assurant le grossissement des grains. On supprime donc également l'opération de broyage nécessaire dans la technique antérieure, et au cours de laquelle on introduisait obligatoirement d'autres impuretés.

## Revendications

1/ Procédé de préparation d'oxynitrure d'aluminium (AlON) de structure spinelle, de haute pureté, caractérisé en ce que l'on effectue les opérations suivantes :

i) on mélange intimement, à l'état pulvérulent, de l'alumine ($Al_2O_3$) et du nitrure de bore (BN) en respectant une proportion molaire de BN comprise entre 18 et 23% du mélange pulvérulent $Al_2O_3$ + BN ;

ii) on porte ledit mélange pulvérulent $Al_2O_3$ + BN à une température réactionnelle comprise entre 1820 et 1860°C, sous une atmosphère non oxydante, en particulier sous une atmosphère de gaz neutre, pendant une durée suffisante pour réduire la totalité de l'alumine $Al_2O_3$, et

iii) on récupère l'oxynitrure d'aluminium à l'état de poudre.

2/ Procédé selon la revendication 1, caractérisé en ce que le mélange pulvérulent $Al_2O_3$ + BN est porté à une température d'environ 1850°C.

3/ Procédé selon la revendication 2, caractérisé en ce que le mélange pulvérulent $Al_2O_3$ + BN est porté à une température d'environ 1850°C, pendant une durée d'environ 1 heure.

4/ Procédé selon l'une des revendications 1 à 3, caractérisé en ce que l'on utilise de l'alumine de variété alpha.

5/ Procédé selon l'une des revendications 1 à 4, caractérisé en ce que l'atmosphère non oxydante est une atmosphère d'argon.

6/ Procédé selon l'une des revendications 1 à 5, caractérisé en ce que le mélange pulvérulent $Al_2O_3$ + BN est disposé sur un support inerte tel qu'un métal réfractaire ou une céramique inerte telle que du nitrure d'aluminium à l'état fritté.

7/ Procédé selon l'une des revendications 1 à 6, caractérisé en ce que le mélange pulvérulent $Al_2O_3$ + BN est porté à la température réactionnelle dans un four à chauffage haute fréquence.

8/ Procédé selon l'une des revendications 1 à 7, caractérisé en ce que l'on récupère un oxynitrure d'aluminium de structure spinelle, présentant une composition intermédiaire entre les deux compositions limites suivantes :

$Al_{2,77} O_{3,68} N_{0,32}$

$Al_{2,81} O_{3,57} N_{0,43}$

9/ Application de l'oxynitrure d'aluminium obtenu par la mise en oeuvre du procédé selon l'une des revendications 1 à 8, à la réalisation de matériaux frittés transparents aux longueurs d'onde des spectres visible et infra-rouge.

10/ Application selon la revendication 9, à la réalisation de fenêtres transparentes au rayonnement infra-rouge

PRODUITS PRESENTS (%)

FIG_1

T(°C) : 1850°C
TEMPS : 1 heure
ATMOSPHERE : argon

PRODUITS PRESENTS (%)

Al$_2$O$_3$ + 0,25 BN
TEMPS : 1 heure
ATMOSPERE : argon

FIG. 2

PRODUITS PRESENTS (%)

Al$_2$O$_3$ + 0,25 BN
TEMPS (°C) : 1850°C
ATMOSPERE : argon

FIG. 3

ALON GAMMA    AL2O3/BN = 0,4

2θ = 90 DEG.

........    SPECTRE OBSERVE
———————    SPECTRE CALCULE
........    OBSERVE - CALCULE

COUPS EN 2.0 JOUR(s) /10

NUMERO DE CANAL

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | SPRECHSAAL, vol. 116, no. 7, juillet 1983, page 546, Coburg, DE; D. TURPIN-LAUNAY et al.: "Anwendung der bekannten Faktoren zwischen Aluminiumoxid und Bor-(oder Aluminium-) Nitrid zur Synthese von Mischkeramiken" * En entier * | 1 | C 01 B 21/082 G 02 B 1/00 |
| X | CHEMICAL ABSTRACTS, vol. 100, no. 10, 1984, page 280, résumé no. 72841f, Columbus, Ohio, US; D. TURPIN-LAUNAY et al.: "Reaction of boron nitride with alumina. Mechanical properties of alumina composite ceramics containing gamma-aluminum oxynitride and/or boron nitride", & REV. INT. HAUTES TEMP. REFRACT. 1983, 20(3), 147-58 * Résumé * | 1 | |
| A | CERAMIC ENGINEERING AND SCIENCE PROCEEDINGS, vol. 3, no. 1/2, janvier-février 1982, pages 67-76, Columbus, Ohio, US; N.D. CORBIN et al.: "Aluminum oxynitride spinel (ALON) - A new optical and multimode window material" * Page 68, paragraphes 3,4 * | 9,10 | **DOMAINES TECHNIQUES RECHERCHES (Int. Cl.4)** C 01 B 21/00 C 04 B 35/00 |
| A | US-A-3 261 667 (O'CONNOR) | | |
| A | FR-A-2 512 003 (RAYTHEON CO.) | | |
| A | CHEMICAL ABSTRACTS, vol. 104, no. 22, juin 1986, page 327, résumé no. 191628j, Columbus, Ohio, US; & JP-A-60 191 062 (TOKUYAMA SODA CO., LTD) 28-09-1985 | | |

Le présent rapport a été établi pour toutes les revendications

| Lieu de la recherche | Date d'achèvement de la recherche | Examinateur |
|---|---|---|
| LA HAYE | 19-01-1989 | ZALM W.E. |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons
 
& : membre de la même famille, document correspondant

EPO FORM 1503 03.82 (P0402)